# EUROPEAN PATENT APPLICATION

(11) **EP 1 139 684 A1**
(43) Date of publication of application: **04.10.2001**
(21) Application number: 00302677.0
(22) Date of filing: 30.03.2000
(51) Int. Cl.: H04Q 7/38

(54) **Apparatus for automatically switching operation mode of portable mobile communication unit**

(71) Applicant: Dawoon Syscom Co., Ltd., Gyunggi-Do (KR)
(72) Inventor: Cho, Scong Jac, Uijungbu-Si,Gyunggi-Do (KR)
(74) Representative: Gold, Tibor Z.

(57) **Abstract**

An apparatus for automatically switching an operation mode of a portable mobile communication unit to a desired mode. The apparatus includes a mode signal generating unit installed in an area requiring a limited use of the portable mobile communication unit and adapted to generate a mode signal selected from a normal vibration mode signal, a transmission-restricted vibration mode signal, an incoming call cut-off mode signal, an image and data transmission-prohibited mode signal, and a normal operation mode signal. The apparatus also includes the portable mobile communication unit which receives the mode signal from the mode signal generating unit, and executes an operation corresponding to the received mode signal. The apparatus may further include an entrance signal generating unit adapted to generate an entrance signal informing the portable mobile communication unit of an entrance thereof into the area, and an exit signal generating unit adapted to generate an exit signal informing the portable mobile communication unit of an exit thereof into the area. In this case, the portable mobile communication unit executes an operation corresponding to the received mode signal upon detecting the entrance signal while preventing an execution of the operation corresponding to the received mode signal upon detecting the exit signal.

## Description

### BACKGROUND OF THE INVENTION

### Field of the Invention

The present invention relates to a portable mobile communication unit, and more particularly to a method and apparatus for automatically switching the operation mode of a portable mobile communication unit, in which a mode signal generator is installed in an area requiring a quietness and generates a mode signal corresponding to a mode selected from a normal vibration mode, a transmission-restricted vibration mode, an incoming call cut-off mode, an image and data transmission-prohibited mode, and a normal operation mode, thereby automatically switching the portable mobile communication unit to the selected mode in response to the mode signal, so that it prevents a generation of noise caused by call alert tones generated from portable mobile communication units and conversations through those portable mobile communication units in areas requiring a quietness while preventing a leak of image and data information in areas requiring an observation of secrets.

### Description of the Prior Art

As the use of portable mobile communication units such as cellular phones, portable satellite telephones, and pagers is more popularized, there are greater problems caused by audible call alerts, such as ringing tones, generated from portable mobile communication units in areas, requiring a quietness, such as churches, concert halls, theaters, courts, and classrooms, etc. In order to limit a reckless use of portable mobile communication units, it has been strongly required to forcibly limit the use of portable mobile communication units in certain areas.

Various methods have been proposed which are adapted to cut off or restrict communication with portable mobile communication units in certain areas. For example, there is a communication cut-off method for cutting off communication with portable mobile communication units by generating disturbance waves. Another method has also been proposed in which a wave generator is installed at the doorway of a room in order to switch the call alert mode of a portable mobile communication unit from a ringing tone mode to a vibration mode when the communication unit enters the room through the doorway while switching again the call alert mode of the communication unit to the ringing tone mode when the communication unit exits the room through the doorway.

However, the former communication cut-off method is problematic in that the communication function of portable mobile communication units is completely cut off, so that the communication right is violated. Where the communication function of a portable mobile communication unit is completely cut off, this communication unit continuously tries to establish a call channel with a base station because the communication cut-off is considered as being caused by a departure of the communication unit from service areas. For this reason, a great increase in battery consumption occurs, so that the use life of the battery is shortened.

On the other hand, the latter automatic call alert mode switching method has various problems because the call mode switching of the portable mobile communication unit between the ringing tone mode and the vibration mode is carried out only at the doorway where the wave generator is installed, as follows,
1. Although the portable mobile communication unit is automatically switched from the ringing tone mode to the vibration mode when it enters a quietness required area, the user may response to an incoming call, and make a telephone conversation with a calling party. Such a telephone conversation disturbs others in the vicinity. Furthermore, it is impossible to completely prevent the user from making a call. For this reason, the effect of this method for maintaining a quietness in the quietness required area is reduced.
2. Although the portable mobile communication unit is automatically switched from the ringing tone mode to the vibration mode when it enters the quietness required area, the user may manually switch again the call alert mode to the ringing tone mode.
3. Although the call alert mode switching operation is to be conducted at the doorway of the quietness required area, it may not be achieved under the following conditions:
   1) Where the user of a portable mobile communication unit passes through the doorway in a state in which the communication unit is turned off, the call alert mode switching of the communication unit is not conducted.
   2) Where the wave generator is in its OFF state or abnormally operates, the vibration mode of the portable mobile communication unit is not switched again to the ringing tone mode while being maintained in the vibration mode when the user carrying the communication unit exits the quietness required area through the doorway where the wave generator is installed.
4. Problems may also occur due to the fact that the portable mobile communication unit is maintained in the vibration mode within the quietness required area installed with the wave generator. For example, when a concert or lecture has not been yet begun in a concert hall or classroom, that is, when the user waits for the beginning of the concert or lecture, it is unnecessary for the portable mobile communication unit to be maintained in the vibration mode. Accordingly, the forced maintenance of the vibration mode in such a case may be an unreasonable or excessive restriction for portable mobile communication.
5. Where the user of a portable mobile communication unit passes through the doorway in a state in which the communication unit is turned off, the call alert mode switching of the communication unit is not conducted.
6. The portable mobile communication unit should continuously check transmission of electric waves generated from the signal generator in order to surely receive the transmitted electric waves when it passes through the doorway where the signal generator is installed. For this reason, an increase in battery consumption occurs. In order to establish a speech channel in response to an incoming call from a base station, the portable mobile communication unit receives external signals at intervals of a certain time, for example, 2.56 seconds. For this reason, if the portable mobile communication unit passes through the doorway at an optional time point between successive signal receiving points, it may be likely to fail to receive the electric waves generated from the signal generator. In this case, the portable mobile communication unit is not switched to the vibration mode even though it has passed through the doorway. This may be solved by reducing the signal reception interval from 2.56 seconds to a time span of 0.5 to 1 second. In this case, however, a great increase in battery consumption occurs due to an increase in the number of times for the portable mobile communication unit to check reception signals.

### SUMMARY OF THE INVENTION

Therefore, the present invention has been made in view of the above mentioned problems, and an object of the invention is to solve the above mentioned problems and to provide an apparatus for automatically switching the operation mode of a portable mobile communication unit, in which a mode signal generator is installed in an area requiring a quietness and generates a mode signal corresponding to a mode selected from a normal vibration mode, a transmission-restricted vibration mode, an incoming call cut-off mode, an image and data transmission-prohibited mode, and a normal operation mode, thereby automatically switching the portable mobile communication unit to the selected mode in response to the mode signal, so that it prevents a generation of noise caused by call alert tones generated from portable mobile communication units and conversations through those portable mobile communication units in areas requiring a quietness while preventing a leak of image and data information in areas requiring an observation of secrets.

In accordance with one aspect, the present invention provides an apparatus for automatically switching an operation mode of a portable mobile communication unit to a desired mode, comprising: a mode signal generating unit installed in an area requiring a limited use of the portable mobile communication unit and adapted to generate a mode signal selected from a normal vibration mode signal for switching the portable mobile communication unit from a ringing tone mode to a vibration mode, a transmission-restricted vibration mode signal for switching the portable mobile communication unit from the ringing tone mode to the vibration mode while allowing a reception of an incoming call and a speech from a calling party, but preventing a transmission of a speech from the portable mobile communication unit, an incoming call cut-off mode signal for switching the portable mobile communication unit to a mode for preventing call alerts from being generated from the portable mobile communication unit in response to the incoming call, an image and data transmission-prohibited mode signal for switching the portable mobile communication unit to a mode for preventing a transmission of images and data with the portable mobile communication unit while allowing a telephone conversation of the portable mobile communication unit, and a normal operation mode signal for switching the portable mobile communication unit to a mode for allowing the portable mobile communication unit to normally operate; and the portable mobile communication unit for receiving the mode signal from the mode signal generating unit, and executing an operation corresponding to the received mode signal.

In accordance with another aspect, the present invention provides an apparatus for automatically switching an operation mode of a portable mobile communication unit to a desired mode, comprising: a mode signal generating unit installed in an area requiring a limited use of the portable mobile communication unit and adapted to generate a mode signal selected from a normal vibration mode signal for switching the portable mobile communication unit from a ringing tone mode to a vibration mode, a transmission-restricted vibration mode signal for switching the portable mobile communication unit from the ringing tone mode to the vibration mode while allowing a reception of an incoming call and a speech from a calling party, but preventing a transmission of a speech from the portable mobile communication unit, an incoming call cut-off mode signal for switching the portable mobile communication unit to a mode for preventing call alerts from being generated from the portable mobile communication unit in response to the incoming call, an image and data transmission-prohibited mode signal for switching the portable mobile communication unit to a mode for preventing a transmission of images and data with the portable mobile communication unit while allowing a telephone conversation of the portable mobile communication unit, and a normal operation mode signal for switching the portable mobile communication unit to a mode for allowing the portable mobile communication unit to normally operate; an entrance signal generating unit installed at a doorway of the area and adapted to generate an entrance signal informing the portable mobile communication unit of an entrance thereof into the area; an exit signal generating unit installed at the doorway of the area and adapted to generate an exit signal informing the portable mobile communication unit of an exit thereof into the area; and the portable mobile communication unit for receiving the mode signal from the mode signal generating unit, and executing an operation corresponding to the received mode signal upon detecting the entrance signal generated from the entrance signal generating unit while preventing an execution of the operation corresponding to the received mode signal upon detecting the exit signal generated from the exit signal generating unit.

### BRIEF DESCRIPTION OF THE DRAWINGS

The above objects, and other features and advantages of the present invention will become more apparent after a reading of the following detailed description when taken in conjunction with the drawings, in which:
Fig. 1 is a block diagram illustrating an apparatus for automatically switching the operation mode of a portable mobile communication unit in accordance with an embodiment of the present invention;
Fig. 2 is a block diagram illustrating the configuration of a mode signal generating unit included in the apparatus of Fig. 1;
Fig. 3 is a block diagram illustrating the configuration of the portable mobile communication unit shown in Fig. 1;
Fig. 4 is a block diagram illustrating an apparatus for automatically switching the operation mode of a portable mobile communication unit in accordance with another embodiment of the present invention in which it is checked whether a portable mobile communication unit enters or exits an area to which the apparatus is applied;
Fig. 5a is a block diagram illustrating a signal detector for detecting an entrance of the portable mobile communication unit into the area in the case of Fig. 4;
Fig. 5b is a block diagram illustrating a signal detector for detecting an exit of the portable mobile communication unit into the area in the case of Fig. 4;
Fig. 6a is a block diagram illustrating a device for generating a time-divided signal; and
Fig. 6b is a diagram illustrating a time-divided format of signals generated from the time-divided signal generating device of Fig. 6a.

### DESCRIPTION OF THE PREFERRED EMBODIMENTS

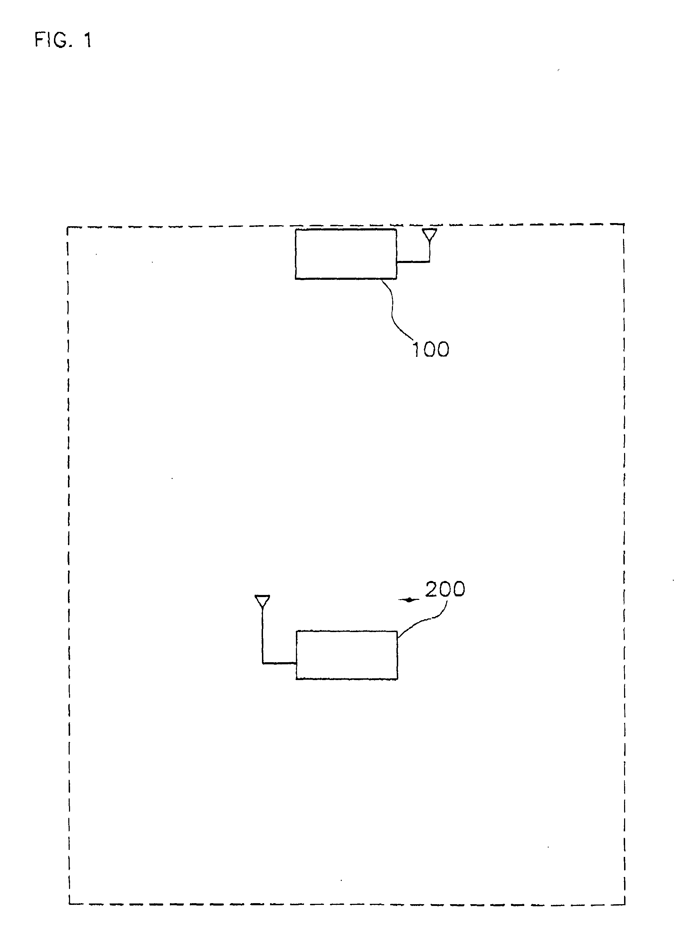

Now, a preferred embodiment of the present invention associated with an apparatus for automatically switching the operation mode of a portable mobile communication unit will be described in detail with reference to Figs. 1 to 6b. In accordance with the preferred embodiment of the present invention, a mode signal generating unit 100 is provided which serves to generate a mode signal corresponding to a mode selected from a normal vibration mode, a transmission-restricted vibration mode, an incoming call cut-off mode, an image and data transmission-prohibited mode, and a normal operation mode. The mode signal generating unit 100 is installed in a quietness required area. When a portable mobile communication unit, which is denoted by the reference numeral 200, receives the mode signal generated from the mode signal generating unit 100, it conducts an operation corresponding to the received mode signal.

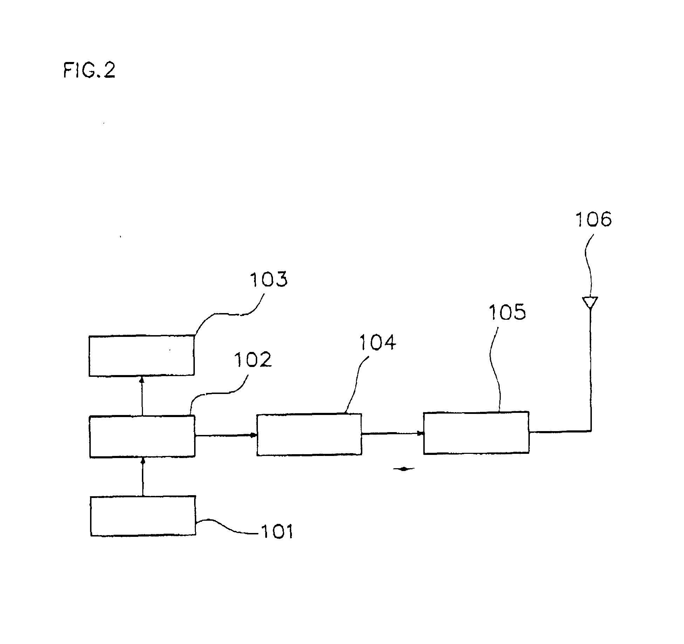

As shown in Figs. 1 and 2, the mode signal generating unit 100 includes an input unit 101 for manually selecting a desired operation mode from a normal vibration mode, a transmission-restricted vibration mode, an incoming call cut-off mode, an image and data transmission-prohibited mode, and a normal operation mode, thereby outputting a mode signal. A controller 102 receives the mode signal from the input unit 101, and controls a display unit 103 to display the selected mode. When one of the normal vibration mode, transmission-restricted vibration mode, incoming call cut-off mode, image and data transmission-prohibited mode, and normal operation mode is displayed on the display unit 103, the user of the mode signal generating unit 100 can identify the selected operation mode.

The controller 102 also controls a modulator 104 to modulate the mode signal. The modulated signal from the modulator 104 is then converted into a radio frequency (RF) signal while being amplified to a desired level. The amplified RF signal is transmitted over an antenna 106. This transmission signal is continuously outputted from the mode signal generating unit 100 so that it is received by a portable mobile communication unit 200 entering the quietness required area.

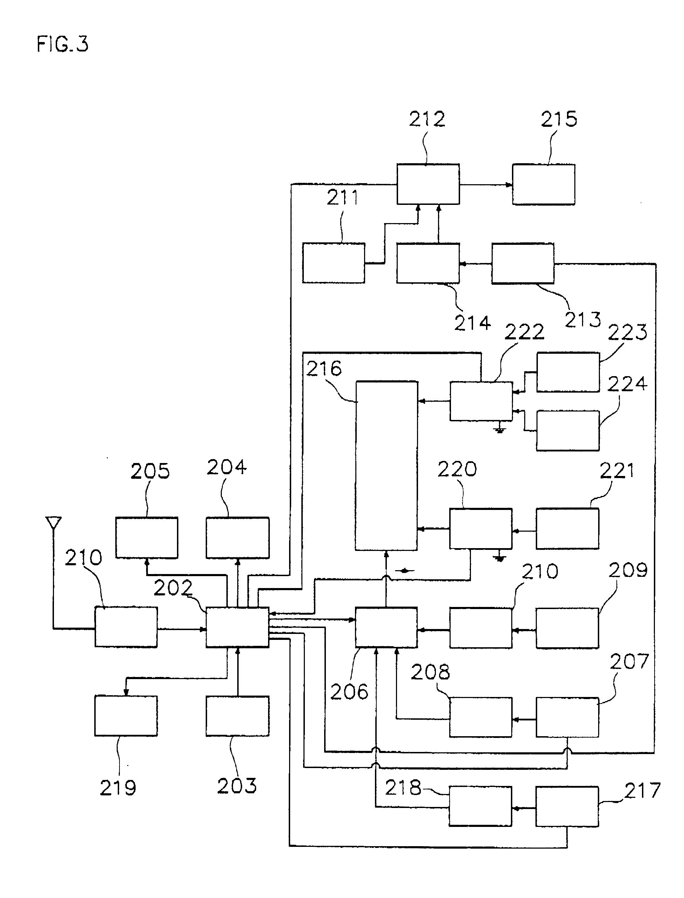

Fig. 3 is a block diagram illustrating a detailed configuration of a portable mobile communication unit 200 to which the present invention is applied.

The portable mobile communication unit 200 includes a signal detector 201 for detecting an output signal from the mode signal generating unit 100 installed in a quietness required area when the portable mobile communication unit 200 enters the quietness required area. When the signal detector 201 detects an output signal from the mode signal generating unit 100, it sends the detected signal to a controller 202. This controller 202 may be configured to continuously check signals received by the signal detector 201 in order to detect a mode signal by the signal detector 201. Alternatively, the controller 202 may be configured to check a mode signal received by the signal detector 201 only when an incoming call is generated or when an outgoing call is generated. In either case, the controller 202 controls the portable mobile communication unit 200 to be switched to a mode corresponding to the received mode signal at the point of time when the reception of the mode signal is determined.

Where the mode signal detected by the signal detector 201 corresponds to a normal vibration mode signal, the controller 202 controls the portable mobile communication unit 200 to conduct an operation corresponding to a normal vibration mode. That is, when an incoming call it detected in the normal vibration mode, the controller 202 controls a vibration driving circuit 204 for driving a vibrator or a lamp, thereby generating vibrations or light. Accordingly, the user of the portable mobile communication unit 200 can recognize the incoming call, based on the generated vibrations or light (hereinafter, simply referred to as "vibrations"). At this time, the controller 202 does not apply any activation signal to a ringer driving circuit 205.

Where the mode signal detected by the signal detector 201 corresponds to a transmission-restricted vibration mode signal, the controller 202 rejects key signals received from an input unit 203, except for a key signal required for a reception of the incoming call and key signals associated therewith, in order to prevent the user from making a telephone conversation with a calling party or making a call. That is, when an incoming call is detected in the transmission-restricted vibration mode, the controller 202 controls the vibration driving circuit 204 to generate vibrations while disabling the ringer driving circuit 205. In response to a key signal manually generated, for a reception of the incoming call, from the input unit 203 in response to the incoming call, the controller 202 outputs a first speech message of, for example, "Your voice is not transmitted to the calling party.", stored in a first memory 213. This first speech message is applied to a first digital/analog (D/A) converter 214 which, in turn, converts the speech message into a corresponding analog signal. This analog signal is then outputted to a speaker 215 via a first multiplexer 212. Accordingly, the user of the portable mobile communication unit 200 can hear the first speech message informing of the fact that he cannot transmit any speech while being only allowed to receive incoming calls. Thereafter, the controller 202 controls the first multiplexer 212 to receive a speech from the calling party via a receiving unit 211.

The controller 202 also cuts off a speech signal inputted to a microphone 209 in response to a reception of the speech from the calling party and amplified by an amplifier 210. Simultaneously, the controller 202 outputs a second speech message of, for example, "I cannot answer your call because I am in a telephone conversation-restricted area, but can hear your speech.", stored in a second memory 207. The second speech message is applied to a second (D/A) converter 208 which, in turn, converts the speech message into a corresponding analog signal. The analog signal from the D/A converter 208 is then sent to a transmitting unit 216 via a second multiplexer 206 so that it is finally transmitted to the calling party. After the transmission of the second speech message from the transmitting unit 261, the controller 202 switches the second multiplexer 206 to be coupled to the ground. In the state of the second multiplexer 206 coupled to the ground, it is prevented for the speech of the user, received by the microphone 209, from being transmitted to the calling party.

In order to allow the calling party to recognize the fact that the user is hearing the speech of the calling party, the user manipulates the input unit 203 to input a corresponding key signal. In response to the key signal from the input unit 203, the controller 202 outputs a third speech message of, for example, "yes", "no", or "listening", stored in the second memory 207. The third speech message is applied to the second D/A converter 208 which, in turn, converts the third speech message into a corresponding analog signal. The analog signal from the D/A converter 208 is then sent to the transmitting unit 216 via the second multiplexer 206 so that it is finally transmitted to the calling party. For instance, the message "yes" is transmitted when the user depresses a numeral key of, for example, "1", included in the input unit 203 during a reception of the speech of the calling party, the message "yes" is transmitted. In response to the depression of a numeral key of, for example, "2", the message "no" is transmitted. The message "listening" is transmitted in response to the depression of a numeral key of, for example, "3".

Where the transmitting unit 216 is configured to transmit speech signals in a digital fashion, the first through third D/A converters 214, 208, and 218 may be dispensed with. This is because the speech messages stored in the first through third D/A converters 214, 208, and 218 are digital data. Although the first and second multiplexers 212 and 206 have been described as being of an analog type, they may be of a digital type. Alternatively, the functions of the first and second multiplexers 212 and 206 may be implemented in a software fashion. A speech signal received by the microphone 209 is amplified by the amplifier 210, and then applied to the second multiplexer 206 which, in turn, selectively transmits the speech signal to the transmitting unit 216 under the control of the controller 202. The speech signal transmitted to the transmitting unit 216 from the second multiplexer 206 is converted into a digital signal while passing through an analog/digital (A/D) converter internally equipped in the transmitting unit 216.

On the other hand, where the mode signal detected by the signal detector 201 corresponds to an incoming call cut-off mode signal, the controller 202 controls the portable mobile communication unit 200 to conduct an operation in the incoming call cut-off mode. That is, when the receiving unit 211 receives an incoming call in the incoming call cut-off mode, the controller 202 reads out a fourth speech message of, for example, "I cannot answer your call because I am in a telephone conversation-restricted area. So, please leave your message or contact number.", stored in the third memory 217. The read-out fourth speech message from the third memory 217 is then applied to the third D/A converter 218 which, in turn, converts the received fourth speech message into a corresponding analog signal. In this state, the controller 202 controls the second multiplexer 206 to transmit the analog signal corresponding to the fourth speech message to the calling party via the transmitting unit 216. In this case, the controller 202 may also control a power supply unit 219 to cut off the supply of electric power to the elements of the portable mobile communication unit 200, except for the signal detector 201, input unit 203, and controller 202.

Where the mode signal detected by the signal detector 201 corresponds to an image and data transmission-prohibited mode signal, the controller 202 controls the portable mobile communication unit 200 to conduct an operation in the image and data transmission-prohibited mode. That is, when digital data is inputted to a data input terminal 221 in the image and data transmission-prohibited mode, the controller 202 controls a third multiplexer 220, coupled to the data input terminal 221, to be coupled to the ground. In the state coupled to the ground, the third multiplexer 220 prevents the digital data inputted to the data input terminal 221 from being transmitted to the transmitting unit 216. The controller 202 also conducts a control for cutting off an image signal inputted to an image input terminal 224 and an image signal outputted from a camera 223 equipped in the portable mobile communication unit 200. That is, the control unit 202 controls a fourth multiplexer 222, coupled to both the image input terminal 224 and the camera 223. In the state coupled to the ground, the fourth multiplexer 222 prevents the image signal from the camera 223 or image input terminal 224 from being transmitted to the transmitting unit 216.

Although the user of the portable mobile communication unit 200 selects an image and data transmission mode by manipulating the input unit 203 under the condition in which the portable mobile communication unit 200 is in the image and data transmission-prohibited mode in accordance with the image and data transmission-prohibited mode signal received from the mode signal generating unit 100 via the signal detector 201, it is impossible to transmit any image or data from the portable mobile communication unit 200 because the third and fourth multiplexers 220 and 22 are in a state coupled to the ground. Even in this image and data transmission-prohibited mode, a telephone conversation may be allowed by controlling the second multiplexer 206 to transmit a speech, received by the microphone 209, to the transmitting unit 216 via the amplifier 210.

Also, the controller 202 controls the portable mobile communication unit 200 to conduct a normal operation when a normal operation mode signal is detected by the signal detector 201 or when there is no mode signal, corresponding to the normal vibration mode, transmission restricted vibration mode, incoming call cut-off mode, or image and data transmission-prohibited mode, detected by the signal detector 201.

The mode signals generated from the mode signal generator 200, which include the normal vibration mode signal, transmission-restricted vibration mode signal, incoming call cut-off mode signal, image and data transmission-prohibited mode signal, and normal operation mode signal, may be distinguished from one another in accordance with various methods. For example, the mode signal generator 200 generates different mode signals using different frequencies or different digital codes, respectively. Alternatively, different transmission frequencies may be used.

In accordance with the method in which mode signals have different frequencies, respectively, for example, the normal operation mode signal may have a frequency of 100 Hz, the normal vibration mode signal a frequency of 200 Hz, the transmission-prohibited mode signal a frequency of 300 Hz, the incoming call cut-off mode signal a frequency of 400 Hz, and the image and data tranemission-prohibited signal a frequency of 500 Hz, respectively.

In accordance with the method in which mode signals have different codes, respectively, for example, the normal operation mode signal may be allocated with a code of 0011, the normal vibration mode signal a code of 0101, the transmission-prohibited mode signal a code of 0110, the incoming call cut-off mode signal a code of 1010, and the image and data transmission-prohibited signal a code of 1100, respectively.

The method using different transmission frequencies is a method in which mode signals are transmitted at different RF frequencies, respectively. In accordance with this method, for example, the normal operation mode signal may be transmitted at a transmission frequency of 300.000 MHz, the normal vibration mode signal at a transmission frequency of 300.010 MHz, the transmission-prohibited mode signal at a transmission frequency of 300.020 MHz, the incoming call cut-off mode signal at a transmission frequency of 300,030 MHz, and the image and data transmission-prohibited signal at a transmission frequency of 300,040 MHz, respectively.

The selection of a desired mode from the normal vibration mode, transmission-restricted vibration mode, incoming call cut-off mode, image and data transmission-prohibited mode, and normal operation mode may be made in accordance with the property and use purpose of an area to which the present invention is applied, and time, For example, different modes may be selected in accordance with whether the area, to which the present invention is applied, is a concert hall or a church or whether or not a concert or worship service in that area is begun.

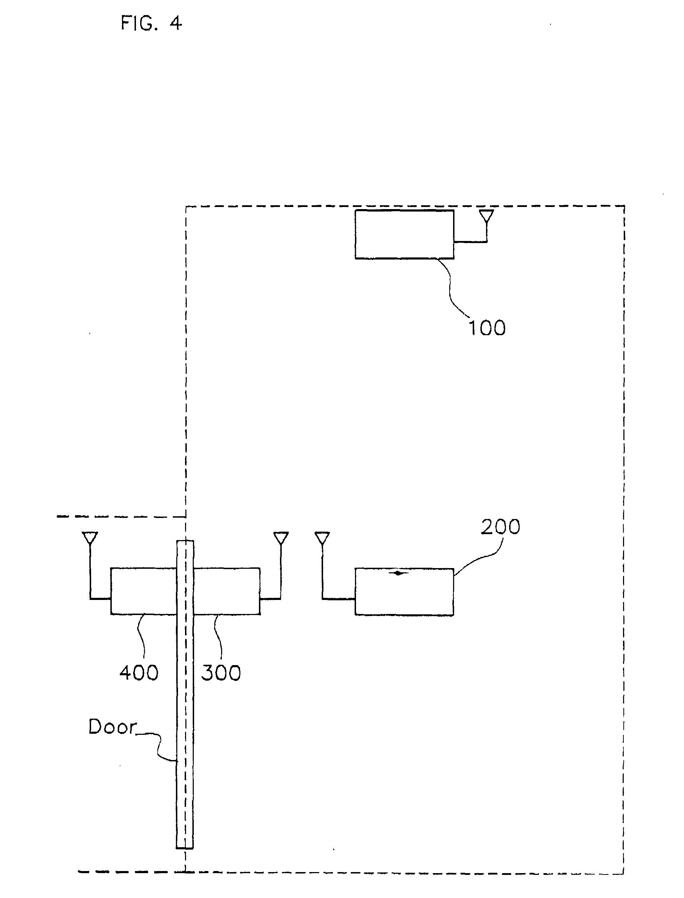

Referring to Figs. 4 to 5b, another embodiment of the present invention is illustrated, respectively. Although a portable mobile communication unit located outside an *area,* to which the present invention is applied, does not enter that area, it may be affected by a mode signal generated from the mode signal generating unit 100 installed at the area. Accordingly, it is necessary to prevent portable mobile communication units, located outside the area installed with the mode signal generating unit 100, from being affected by a mode signal generated from the mode signal generating unit 100, To this end, in accordance with the embodiment of the present invention illustrated in Fig. 4, two signal generators are installed at the doorway of the area. to which the present invention is applied. One signal generator is an entrance signal generating unit 300 installed at the doorway of the subject area inside that area and adapted to inform the portable mobile communication unit 200 of an entrance into the area through the doorway. The other signal generator is an exit signal generating unit 400 installed at the doorway of the subject area outside that area and adapted to inform the portable mobile communication unit 200 of an exit from the area through the doorway.

The portable mobile communication unit 200 receives an entrance signal generated from the entrance signal generating unit 300 or an exit signal generated from the exit signal generating unit 400 while passing through the doorway. Only in a state receiving the entrance signal, the portable mobile communication unit 200 is allowed to conduct a mode switching operation in response to a mode signal which is received from the mode signal generating unit 100 and may be one of the above mentioned selected from the normal vibration mode signal, transmission-restricted vibration mode signal, incoming call cut-off mode signal, image and data transmission-prohibited mode signal, and normal operation mode signal.

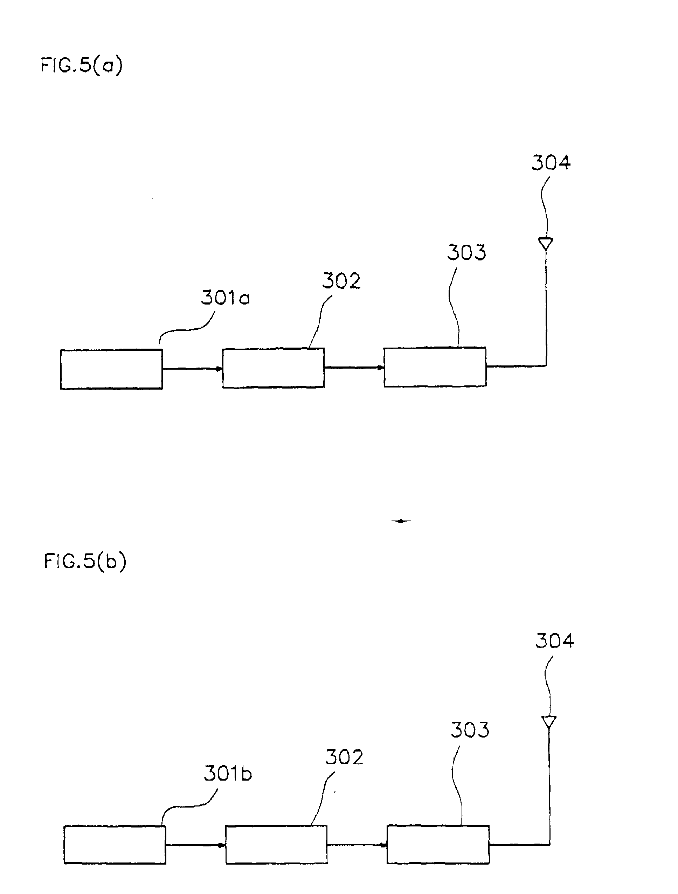

Detailed configurations of the entrance and exit signal generators 300 and 400 are illustrated in Figs. 5a and 5b, respectively.

The entrance and exit signal generating units 300 and 400 have no input device and display device, as different from the mode signal generating unit 100. This is because the entrance and exit signal generating units 300 and 400 always generate constant signals indicative of entrance and exit information without any variation in those information. As shown in Fig. 5a, an entrance signal generated from an entrance signal generator 301a is modulated by a modulator 302a, and then converted into an RF signal by an RF converter 303a. The RF signal from the RF converter 303a is then transmitted to the portable mobile communication unit 200 over an antenna 304a after being amplified to a desired level. As shown in Fig. 5b, an exit signal generated from an exit signal generator 301b is modulated by a modulator 302b, and then converted into an RF signal by an RF converter 303b. The RF signal from the RF converter 303b is then transmitted to the portable mobile communication unit 200 over an antenna 304b after being amplified to a desired level.

When the signal detector 201 of the portable mobile communication unit 200 detects an entrance signal generated from the entrance signal generator 300 when the user of the portable mobile communication unit 200 enters the subject area while carrying the portable mobile communication unit 200, it informs the controller 202 of the detection of the entrance signal. The controller 202 subsequently stores information, indicative of the entrance of the portable mobile communication unit 200, in its internal memory. On the other hand, where the user exits the subject area, the signal detector 201 of the portable mobile communication unit 200 detects an exit signal generated from the exit signal generating unit 400, it informs the controller 202 of the detection of the exit signal. The controller 202 subsequently stores information, indicative of the exit of the portable mobile communication unit 200, in its internal memory. Thus, the automatic mode switching operation according to the mode signal from the mode signal generating unit 100 can be conducted only for portable mobile communication units 200 entering the subject area.

The signal generation and transmission carried out by the mode signal generating unit 100, entrance signal generating unit 300 and exit signal generating unit 400 may be achieved using various methods. For example, these may be achieved using the following four methods.

In accordance with the first method, the signal generating units 100, 300, and 400 generate signals having the same frequency, but different codes, respectively, in order to transmit those signals on a single channel.

In accordance with the second method, respective signals generated from the signal generating units 100, 300, and 400 have different frequencies so that they do not interfere with one another. For example, the mode signal generating unit 100 generates a signal having a frequency of 300 MHz whereas the entrance and exit signal generating units 300 and 400 generate signals having a frequency of 300.1 MHz, respectively. In this case, the signals from the signal generating units 300 and 400 have different codes, respectively, so that they are distinguished from each other.

In accordance with the third method, the signal generating units 100, 300, and 400 use different frequencies, respectively. For example, the mode signal generating unit 100 uses a frequency of 300 MHz, the entrance signal generating unit 300 uses a frequency of 300.1 MHz, and the exit signal generating unit 400 uses a frequency of 300.2 MHz.

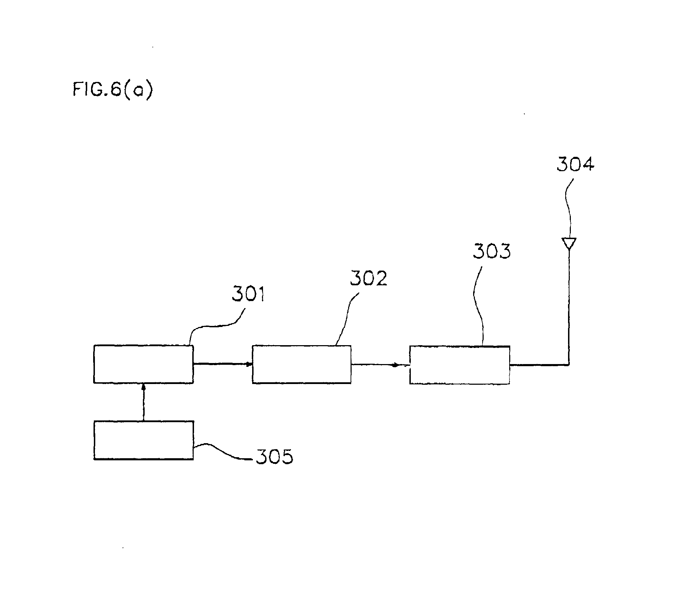

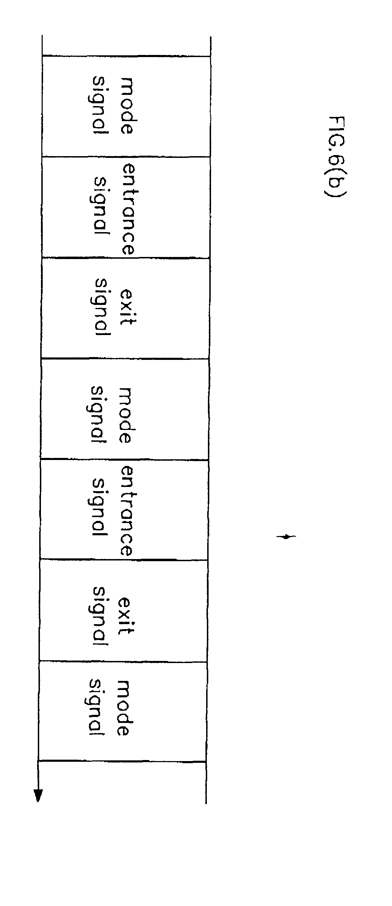

On the other hand, the fourth method is a method using a time division scheme. In accordance with this fourth method, the signal generating units 100, 300 and 400 generate signals of the same frequency in a time-divided fashion, that is, at different points of time. To this end, the controller 202 of the mode signal generating unit 100 allocates different time slots for respective signals of the signal generating units 100, 300, and 400. In this case, the signal generating units 100, 300, and 400 may be connected together by means of cables or wires so that they generate signals in a time-divided fashion, respectively. In this case, however, there is an inconvenience. Accordingly, it is preferred that the time-divided signal generation be achieved in a radio fashion. A configuration for achieving the time-divided signal generation of the signal generating units 100, 300 and 400 is illustrated in Fig. 6a. The configuration may be implemented for both the entrance and exit signal generating units 300 and 400. The configuration of Fig. 6a is different from those of Figs. 5a and 5b in that it is provided with a signal detector 305. When the mode signal generating unit 100 generates a mode signal for a time slot allocated for the mode signal, the signal detector 305 of the entrance signal generating unit 300 detects the generated mode signal. Based on the detection of the signal detector 305, the entrance signal generating unit 300 begins to generate an entrance signal at the point of time when the generation of the mode signal is completed. The generation of the entrance signal is continued for a time slot allocated for the entrance signal. The signal detector 305 of the entrance signal generating unit 400 detects the generated entrance signal, so that the exit signal generating unit 400 begins to generate an exit signal at the point of time when the generation of the entrance signal is completed. The generation of the exit signal is continued for a time slot allocated for the exit signal. At the point of time when the generation of the exit signal is completed, the mode signal generating unit 100 generates again a mode signal. As the above mentioned operations are repeatedly carried out, a signal having a time-divided format of Fig. 6 is continuously generated. The portable mobile communication unit 200 detects the entrance signal, exit signal, and mode signal from the time-divided signal while distinguishing those signals from one another, based on respective codes or frequencies of the signals. For example, a signal having a frequency of 50 Hz is detected as the entrance signal whereas a signal having a frequency of 75 Hz is detected as the exit signal. Also, signals of 100 Hz, 200 Hz, 300 Hz, 400 Hz, and 500 Hz are detected as different mode signals, respectively.

When the portable mobile communication unit 200 enters the subject area, it first receives an exit signal, and then an entrance signal. In accordance with such a signal receiving order, the portable mobile communication unit 200 detects its entrance into the subject area. Where the portable mobile communication unit 200 first receives an entrance signal, and then an exit signal, the portable mobile communication unit 200 recognizes, based on this signal receiving order, that it has exited the subject area. Thus, only portable mobile communication units within the subject area are controlled to operate in accordance with a mode signal generated from the mode signal generating unit 100 located within the subject area. Accordingly, it is possible to prevent portable mobile communication units, located outside the subject area, from being affected by the mode signal.

The mode signal generating unit 200 may be used along with the entrance and exit signal generating units 300 and 400, as mentioned above. However, this mode signal generating unit 200 should be used alone in a completely open area or an area having no doorway.

Where the mode signal generating unit 200 is used alone, it cannot detect its entrance or exit. In this case, even when the mode signal generating unit 200 is located within the subject area, it may be erroneously detected as being located outside the subject area, so that it may not conduct a desired mode switching operation.

In order to solve this problem, it is necessary to distinguish the case, in which the mode signal generating unit 100 is used alone, from the case in which the mode signal generating unit 100 is used along with the entrance and exit signal generating unit 300 and 400.

To this end, the mode signal generating unit 100 is configured to generate two signals of different frequencies for each mode. For example, the mode signal generating unit 100 generates signals of 100 Hz and 600 Hz for a normal operation mode, signals of 200 Hz and 700 Hz for a normal vibration mode, signals of 300 and 800 Hz for a transmission-restricted vibration mode, signals of 400 Hz and 900 Hz for an incoming call cut-off mode, and signals of 500 Hz and 1 KHz for an image and data transmission-prohibited mode, respectively. Where the mode signal generating unit 100 is used alone, it generates a signal of 100 Hz, 200 Hz, 300 Hz, 400 Hz, or 500 Hz in accordance with a selected mode. On the other hand, where the mode signal generating unit 100 is used along with the entrance and exit signal generating unit 300 and 400, it generates a signal of 600 Hz, 700 Hz, 800 Hz, 900 Hz, or 1 KHz in accordance with a selected mode. Of course, five additional keys may be used in order to distinguish the case using the mode signal generating unit 200 alone and the case using the mode signal generating unit 200 along with the entrance and exit signal generating units 300 and 400 for respective modes. Alternatively, only one additional key may be used. In the latter case, the additional key is used to determine whether or not the mode signal generating unit 100 is used alone.

In accordance with the above mentioned configuration, when the portable communication unit 200 detects a mode signal of 600 Hz, 700 Hz, 800 Hz, 900 Hz, or 1 KHz, it is automatically switched to a mode corresponding to the detected mode signal even though there is no checking about the entrance thereof into the subject area. On the other hand, when the portable communication unit 200 detects a mode signal of 100 Hz, 200 Hz, 300 Hz, 400 Hz, or 500 Hz, it is switched to a mode corresponding to the detected mode signal only after the checking about the entrance thereof into the subject area is made.

Thus, the apparatus of the present invention can be applied to both the area having a doorway and the are having no doorway.

Alternatively, the signal generating units 100, 300 and 400 may be configured to generate signals of different frequencies, respectively. Also, they may have separate signal detectors, respectively. In this case, it is possible to completely prevent an interference among the signals generated from the signal generating units 100, 300, and 400.

The signals generated from the signal generating units 100, 300, and 400 may be transmitted on a control channel of the portable mobile communication unit 200. These signals may also be carried by a separate signal so that they are transmitted on the control channel or speech channel of the portable mobile communication unit 200. For the transmission of the above mentioned signal, a separate transmission frequency may also be used which is different from that used in the portable mobile communication unit 200 for call and speech signals.

For the signal generated from the mode signal generating unit, entrance signal generating unit, and exit signal generating unit, electromagnetic waves may be used, In place of such electromagnetic waves, acoustic waves such as ultrasonic waves, ultra-bass sonic waves, or audible sonic waves, light such as infrared rays, or magnetic force generated from, for example, a magnet, may be used.

As apparent from the above description, the present invention provides apparatus for automatically switching the operation mode of a portable mobile communication unit to a desired mode in an area requiring a quietness or a communication security. That is, where the apparatus of the present invention is used in an area requiring a quietness, it automatically switches the call alert mode of portable mobile communication units from a ringing tone mode to a vibration mode or cuts off the reception of an incoming call or a telephone conversation in response to the incoming call under the condition in which those portable mobile communication units are within the quietness required area. In this *case,* accordingly, it is possible to prevent social problems caused by a reckless use of portable mobile communication units. Where the apparatus of the present invention is used in an area, such as a national or public research institute, an industrial facility, a laboratory, or a military camp, requiring a communication security, it can serve to prevent a reckless transmission of images and data. Furthermore, the present invention completely solve the problems involved in the conventional communication cut-off method using disturbance waves or the conventional call alert mode switching method using a wave generator installed at the doorway of a room to switch the call alert mode of a portable mobile communication unit from a ringing tone mode to a vibration mode.

Although the preferred embodiments of the invention have been disclosed for illustrative purposes, those skilled in the art will appreciate that various modifications, additions and substitutions are possible, without departing from the scope and spirit of the invention as disclosed in the accompanying claims.

## Claims

1. An apparatus for automatically switching an operation mode of a portable mobile communication unit to a desired mode, comprising:
a mode signal generating unit installed in an area requiring a limited use of the portable mobile communication unit and adapted to generate a mode signal selected from a normal vibration mode signal for switching the portable mobile communication unit from a ringing tone mode to a vibration mode, a transmission-restricted vibration mode signal for switching the portable mobile communication unit from the ringing tone mode to the vibration mode while allowing a reception of an incoming call and a speech from a calling party, but preventing a transmission of a speech from the portable mobile communication unit, an incoming call cut-off mode signal for switching the portable mobile communication unit to a mode for preventing call alerts from being generated from the portable mobile communication unit in response to the incoming call, an image and data transmission-prohibited mode signal for switching the portable mobile communication unit to a mode for preventing a transmission of images and data with the portable mobile communication unit while allowing a telephone conversation of the portable mobile communication unit, and a normal operation mode signal for switching the portable mobile communication unit to a mode for allowing the portable mobile communication unit to normally operate; and
the portable mobile communication unit for receiving the mode signal from the mode signal generating unit, and executing an operation corresponding to the received mode signal.

2. The apparatus according to claim 1, wherein the mode signal generating unit comprises:
an input unit for manually selecting a desired operation mode from a normal vibration mode, a transmission-restricted vibration mode, an incoming call cut-off mode, an image and data transmission-prohibited mode, and a normal operation mode, thereby outputting a mode signal corresponding to the selected operation mode;
a display unit for displaying the operation mode selected by the input unit; and
a controller for modulating the mode signal outputted from the input unit using a modulator, converting the modulated signal into a radio frequency signal using a radio frequency converter, amplifying the radio frequency signal, and then transmitting the amplified signal in a continued fashion.

3. The apparatus according to claim 1, wherein the portable mobile communication unit comprises:
a ringing bell driving circuit for driving a ringer to generate ringing tones;
a vibration driving circuit for driving a vibrator or a lamp to generate vibrations or light;
a signal detector for detecting the mode signal generated from the mode signal generating unit; and
a controller for receiving the detected mode signal from the signal detector, and sending a drive signal to the vibration driving circuit while preventing the ringing bell driving circuit from being driven, in response to an incoming call, when the detected mode signal corresponds to the normal vibration mode signal, thereby alerting a user of the portable mobile communication unit to the incoming call.

4. The apparatus according to claim 1, wherein the portable mobile communication unit comprises:
an input unit for generating diverse key signals required to execute diverse functions of the portable mobile communication unit;
a ringing bell driving circuit for driving a ringer to generate ringing tones;
a vibration driving circuit for driving a vibrator or a lamp to generate vibrations or light;
a signal detector for detecting the mode signal generated from the mode signal generating unit;
a memory stored with a speech message informing of the fact that the portable mobile communication unit is allowed for a speech reception while being prevented for a speech transmission; and
a controller for receiving the detected mode signal from the signal detector, and sending a drive signal to the vibration driving circuit in response to an incoming call from a calling party, rejecting key signals received from the input unit, except for a key signal required for a reception of an incoming call and key signals associated therewith, preventing the ringing bell driving circuit from being driven, when the detected mode signal corresponds to the transmission-restricted vibration mode signal, thereby alerting a user of the portable mobile communication unit to the incoming call while preventing the user from making a telephone conversation with the calling party or making a call, the controller also serving to output the speech message read out from the memory when the key signal required for a reception of the incoming call is generated, thereby informing the user of the speech message.

5. The apparatus according to claim 1, wherein the portable mobile communication unit comprises:
a signal detector for detecting the mode signal generated from the mode signal generating unit;
a memory stored with a speech message informing of the fact that the portable mobile communication unit is in a telephone conversation-prohibited area;
a microphone for receiving a speech from a user of the portable mobile communication unit, and outputting a corresponding speech signal;
a transmitting unit for transmitting the speech signal outputted from the microphone; and
a controller for receiving the detected mode signal from the signal detector, and cutting off the speech signal outputted from the microphone, in response to an incoming call from a calling party, when the detected mode signal corresponds to the transmission-restricted vibration mode signal, the controller also serving to read out the speech message from the memory, and transmitting the read-out speech message to the calling party through the transmitting unit.

6. The apparatus according to claim 1, wherein the portable mobile communication unit comprises:
an input unit for generating diverse key signals required to execute diverse functions of the portable mobile communication unit;
a signal detector for detecting the mode signal generated from the mode signal generating unit;
a memory stored with speech messages indicative of "yes", "no", and "listening" at different memory addresses, respectively, the speech messages informing of the fact that a user of the portable mobile communication unit is hearing a speech of a calling party; and
a controller for receiving the detected mode signal from the signal detector, the controller serving to read out a selected one of the speech messages from the memory in response to a key signal generated from the input unit during a reception of a speech from a calling party in a state, in which the detected mode signal corresponds to the transmission-restricted vibration mode signal, and transmitting the read-out speech message to the calling party through a transmitting unit equipped in the portable mobile communication unit, the key signal corresponding to a selected one of the memory addresses associated with the selected speech message.

7. The apparatus according to claim 1, wherein the portable mobile communication unit comprises:
an input unit for generating diverse key signals required to execute diverse functions of the portable mobile communication unit;
a ringing bell driving circuit for driving a ringer to generate ringing tones;
a vibration driving circuit for driving a vibrator or a lamp to generate vibrations or light;
a signal detector for detecting the mode signal generated from the mode signal generating unit;
a memory stored with a speech message informing of the fact that the portable mobile communication unit is allowed for a speech reception while being prevented for a speech transmission, the speech message being indicative of "I cannot answer your call because I am in a telephone conversation-restricted area. So, please leave your message or contact number.";
a controller for receiving the detected mode signal from the signal detector, and preventing both the ringing bell driving circuit and the vibration driving circuit from being driven, in response to an incoming call from a calling party, when the detected mode signal corresponds to the telephone conversation cut-off mode signal, the controller also serving to read out the speech message from the memory and transmitting the read-out message to the calling party through a transmitting unit equipped in the portable mobile communication unit, or cutting off the supply of electric power to all elements of the portable mobile communication unit, except for the signal detector, the input unit, and the controller.

8. The apparatus according to claim 1, wherein the portable mobile communication unit comprises:
a data input terminal for receiving external digital data;
a signal detector for detecting the mode signal generated from the mode signal generating unit;
a transmitting unit for externally transmitting the digital data outputted from the data input terminal; and
a controller for receiving the detected mode signal from the signal detector, and cutting off the digital data outputted from the data input terminal when the detected mode signal corresponds to the image and data transmission-prohibited mode signal, thereby preventing the digital data from being applied to the transmitting unit.

9. The apparatus according to claim 1, wherein the portable mobile communication unit comprises:
an image input terminal for receiving an external image signal;
a camera for picking up an external image, and outputting a corresponding image signal
a signal detector for detecting the mode signal generated from the mode signal generating unit;
a transmitting unit for externally transmitting the image signals respectively outputted from the image input terminal and the camera; and
a controller for receiving the detected mode signal from the signal detector, and cutting off the image signals outputted from the image input terminal and the camera when the detected mode signal corresponds to the image and data transmission-prohibited mode signal, thereby preventing the image signals from being applied to the transmitting unit.

10. The apparatus according to claim 8 or 9, wherein the controller allows a speech, inputted to a microphone equipped in the portable mobile communication unit, to be transmitted to the transmitting unit in the image and data transmission-prohibited mode, so that a user of the portable mobile communication unit is allowed to make a telephone conversation.

11. The apparatus according to claim 1, wherein the portable mobile communication unit comprises:
a signal detector for detecting the mode signal generated from the mode signal generating unit; and
a controller for receiving the detected mode signal from the signal detector, and controlling the portable mobile communication unit to execute a normal operation thereof when the detected mode signal corresponds to the normal vibration mode signal or when there is no mode signal detected by the signal detector.

12. The apparatus according to claim 1, wherein the portable mobile communication unit comprises:
a signal detector for detecting the mode signal generated from the mode signal generating unit; and
a controller for continuously checking whether or not a signal received by the signal detector corresponds to the mode signal, and controlling the portable mobile communication unit to execute an operation corresponding to an operation mode corresponding to the mode signal.

13. The apparatus according to claim 1, wherein the portable mobile communication unit comprises:
a signal detector for detecting the mode signal generated from the mode signal generating unit; and
a controller for checking whether or not a signal received by the signal detector corresponds to the mode signal, at the point of time when an incoming call is made or when an outgoing call is made, and controlling the portable mobile communication unit to execute an operation corresponding to an operation mode corresponding to the mode signal.

14. An apparatus for automatically switching an operation mode of a portable mobile communication unit to a desired mode, comprising:
a mode signal generating unit installed in an area requiring a limited use of the portable mobile communication unit and adapted to generate a mode signal selected from a normal vibration mode signal for switching the portable mobile communication unit from a ringing tone mode to a vibration mode, a transmission-restricted vibration mode signal for switching the portable mobile communication unit from the ringing tone mode to the vibration mode while allowing a reception of an incoming call and a speech from a calling party, but preventing a transmission of a speech from the portable mobile communication unit, an incoming call cut-off mode signal for switching the portable mobile communication unit to a mode for preventing call alerts from being generated from the portable mobile communication unit in response to the incoming call, an image and data transmission-prohibited mode signal for switching the portable mobile communication unit to a mode for preventing a transmission of images and data with the portable mobile communication unit while allowing a telephone conversation of the portable mobile communication unit, and a normal operation mode signal for switching the portable mobile communication unit to a mode for allowing the portable mobile communication unit to normally operate;
an entrance signal generating unit installed at a doorway of the area and adapted to generate an entrance signal informing the portable mobile communication unit of an entrance thereof into the area;
an exit signal generating unit installed at the doorway of the area and adapted to generate an exit signal informing the portable mobile communication unit of an exit thereof into the area; and
the portable mobile communication unit for receiving the mode signal from the mode signal generating unit, and executing an operation corresponding to the received mode signal upon detecting the entrance signal generated from the entrance signal generating unit while preventing an execution of the operation corresponding to the received mode signal upon detecting the exit signal generated from the exit signal generating unit.

15. The apparatus according to claim 14, wherein each of the signals generated from the mode signal generating unit, the entrance signal generating unit, and the exit signal generating unit has a form of electromagnetic waves, acoustic waves, light, or magnetic force.

16. The apparatus according to claim 14, wherein:
the signals generated from the mode signal generating unit, the entrance signal generating unit, and the exit signal generating unit have different frequencies, respectively;
the portable mobile communication unit comprises a signal detector for detecting the entrance signal generated from the entrance signal generating unit, and a signal detector for detecting the exit signal generated from the exit signal generating unit;
whereby the signals generated from the mode signal generating unit, the entrance signal generating unit, and the exit signal generating unit are prevented from interfering with one another.

17. The apparatus according to claim 14, wherein the signals generated from the mode signal generating unit, the entrance signal generating unit, and the exit signal generating unit have a time-divided format together.

18. The apparatus according to claim 14, wherein the signals generated from the mode signal generating unit, the entrance signal generating unit, and the exit signal generating unit are transmitted on a control channel of the portable mobile communication unit, carried by a separate signal to transmit them on the control channel or a speech channel of the portable mobile communication unit, or transmitted at a transmission frequency different from that used in the portable mobile communication unit for call and speech signals.
